# EUROPÄISCHE PATENTSCHRIFT

(11) **EP 1 494 960 B1**
(45) Veröffentlichungstag und Bekanntmachung des Hinweises auf die Patenterteilung: **25.01.2006**
(21) Anmeldenummer: 03714727.9
(22) Anmeldetag: 05.02.2003
(51) Int. Cl.: B67D 1/00, B67D 5/62, A23L 3/22, A23L 2/46

(54) **DISPENSOR F R FL SSIGE LEBENSMITTEL**
DISPENSER FOR LIQUID FOODSTUFFS
DISTRIBUTEUR DE DENREES ALIMENTAIRES LIQUIDES

(30) Priorität: 18.04.2002 DE 10217448; 17.09.2002 DE 10243259
(43) Veröffentlichungstag der Anmeldung: 12.01.2005
(73) Patentinhaber: Förster, Martin, 78234 Engen (DE)
(72) Erfinder: Förster, Martin, 78234 Engen (DE)
(74) Vertreter: Weiss, Peter
(86) Internationale Anmeldenummer: PCT/EP2003/001128
(87) Internationale Veröffentlichungsnummer: WO 2003/086950

(56) Entgegenhaltungen:
- EP-A- 0 506 646
- EP-A- 0 866 028
- CH-A- 171 704
- DE-C- 19 942 583
- GB-A- 512 418
- US-A- 1 382 569
- US-A- 2 126 552
- US-A- 2 561 784
- US-A- 4 416 194

## Beschreibung

Die vorliegende Erfindung betrifft einen Dispensor für flüssige Lebensmittel, Getränke, insbesondere Säfte, wobei eine in einem Behälter angeordnete Einrichtung zum Transportieren des flüssigen Lebensmittels, insbesondere Rohrspirale von einer die Einrichtung aufheizenden Flüssigkeit umgeben ist.

Derartige Dispensoren sind in vielfältigster Form und Ausführung bekannt. Sie dienen insbesondere zum Ausbringen von flüssigen Lebensmitteln, ggf. kann das flüssige Lebensmittel darin erhitzt werden.

Nachteilig ist jedoch, dass ein entsprechendes Erhitzen in derartigen herkömmlichen Dispensoren äusserst langsam erfolgt und zudem die herkömmlichen Dispensoren apparativ sehr aufwendig und teuer in der Herstellung sind.

Ausserdem verbrauchen sie zum Erwärmen von flüssigen Lebensmitteln sehr viel Energie.

Die CH 171 704 A offenbart ein kontinuierlich arbeitender Apparat zum Sterilisieren von Süssmost und anderen Fruchtsäften, bei welchem das zu sterilisierende Gut durch eine Rohrspirale geleitet wird. Die Rohrspirale ist in einem beheizten Flüssigkeitsbehälter eingesetzt. Das zu sterilisierende Gut wird über einen manuell bedienbaren Auslaufhahn, beispielsweise in Flaschen abgefüllt.

Die EP-A 0 506 646 offenbart eine Einrichtung zum Pasteurisieren von Flüssigkeiten mit einem Wärmetauscher, wobei im Bereich eines Auslaufes ein Sekundärkreises des Wärmetauschers eine der Abfüllanlage vorgeschaltete verstellbare Drossel vorgesehen ist, die von einem im Auslauf des Sekundärkreises des Wärmetauschers angeordneten Temperaturfühlers gesteuert ist. Nachteilig ist hieran, dass die Verweilzeit des zu pasteurisierenden Lebensmittels nicht überprüft wird.

Die EP 0 866 028 A1 offenbart eine einfache Einrichtung zum Erwärmen von flüssigen Lebensmitteln, wobei das flüssige Lebensmittel durch eine Rohrspirale geführt ist und die Rohrspirale in einem beheizten Flüssigkeitsbehältnis sitzt. Die Flüssigkeit wird im Behältnis mittels eines elektrisch betriebenen Flügelrades umgewälzt.

Die GB 512 418 A offenbart einen einfachen Wärmetauscher, wobei in einem Behälter entsprechende Rohrspiralen eingesetzt sind. Der Behälter wird mit Flüssigkeit durchströmt, um die Rohrspiralen aufzuwärmen.

Der vorliegenden Erfindung liegt die Aufgabe zugrunde, einen Dispensor der eingangs genannten Art zu schaffen, welcher die genannten Nachteile beseitigt und mit welchem sehr energiesparend, zeitsparend ein flüssiges Lebensmittel, ein Getränk, wie Saft, aber auch alkoholische Getränke, wie beispielsweise Glühwein auf eine bestimmbare Temperatur erhitzt werden kann.

Ferner soll die Vorrichtung einfach handzuhaben, kostengünstig herzustellen und energetisch wirtschaftlich zu betreiben sein.

Zur Lösung dieser Aufgabe führen die Merkmale des Anspruches 1.

Bei der vorliegenden Erfindung hat sich als besonders vorteilhaft erwiesen, in einem Behälter, der vorzugsweise zylindrisch ausgebildet ist und waagrecht in einem Gehäuse angeordnet ist, eine Einrichtung als Rohrspirale einzusetzen, die von einem flüssigen Lebensmittel durchströmt wird. Innerhalb der Rohrspirale ist wenigstens ein Heizelement angeordnet und erwärmt eine im Behälter befindliche Flüssigkeit, beispielsweise Wasser auf eine wählbare Temperatur.

Damit sich das flüssige Nahrungsmittel, welches durch die Einrichtung, insbesondere durch die Rohrspirale zum Erwärmen geleitet wird, sehr schnell erhitzen lässt, wird innerhalb des Behälters die Flüssigkeit bewegt. Dies kann beispielsweise im Gleich- oder Gegenstromverfahren durch Zirkulation geschehen. Die Zirkulation wird beispielsweise über eine Ringleitung und/oder über einen Antriebsmotor mit Flügelelement erzielt, der in den Behälter eingreift.

Hierdurch wird wesentlich weniger Energie benötigt, um die Flüssigkeit sehr schnell aufzuwärmen und die Wärme auf die Einrichtung, insbesondere die Rohrspirale, insbesondere zum Erhitzen des flüssigen Lebensmittels, zu übertragen.

Ein derartiger Dispensor ist beispielsweise besonders zum Pasteuerisieren von flüssigen Lebensmitteln, Säften geeignet, der sehr kostengünstig herzustellen und energetisch wirtschaftlich zu betreiben ist.

Ferner hat sich als vorteilhaft erwiesen, an den Behälter einen Ausgleichsbehälter anzuschliessen, der auch gleichzeitig eine Vorwärmeinrichtung für Aufnahmebehälter, wie beispielsweise Flaschen, Tassen od. dgl. sein kann.

Über einen entsprechenden Füllstandssensor lässt sich über eine externe Flüssigkeitsquelle beispielsweise immer ein bestimmter Pegel an Flüssigkeit im Behälter und im Ausgleichsbehälter halten.

Ferner hat sich als vorteilhaft erwiesen, dass auch eine Mehrzahl von Vorratsbehälter zur Aufnahme von flüssigen Lebensmittel an einen Dosierer angeschlossen werden kann. Über entsprechende separate Dosierpumpen lässt sich eine wählbare Mischung an unterschiedlich flüssigen Nahrungsmitteln aus einer Mehrzahl von an den Dosierer anschliessenden Vorratsbehältern erzeugen. Über entsprechendes Erhitzen des flüssigen Nahrungsmittels innerhalb des Behälters, beim Durchströmen der Rohrspirale lässt sich beispielsweise ein Saft oder eine Milch sehr kostengünstig und schnell pasteuerisieren. Die vorgewärmte Flasche wird nicht zerstört, wenn sehr heisses, flüssiges Nahrungsmittel in diese abgefüllt wird.

Ferner hat sich als vorteilhaft bei der vorliegenden Erfindung erwiesen, dass zum Durchmischen der Flüssigkeit, insbesondere zum Bewegen der Flüssigkeit diese auch radial in den Behälter beschleunigt eingebracht werden kann, um vorzugsweise im Gleich- oder Gegenstromverfahren die Spirale zu erwärmen. Dies soll ebenfalls im Rahmen der vorliegenden Erfindung liegen.

Von Vorteil ist bei der vorliegenden Erfindung, dass das flüssige Lebensmittel, bspw. Milch schubweise mittels der Dosierpumpe durch den Behälter, insbesondere dessen Rohrspirale gepumpt wird, so dass die Einwirkzeit zum Pasteurisieren innerhalb des Behälters erhöht ist und hierdurch ein Pasteurisierungsprozess optimiert ist.

Ferner hat sich als vorteilhaft erwiesen, insbesondere im Bereich zwischen Behälterausgang bzw. dessen Anschluss und Auslass zumindest ein Temperatursensor vorzusehen, der die Austrittstemperatur des flüssigen Lebensmittel misst. Weicht diese von der Pasteurisierungstemperatur aus einem wählbaren Toleranzbereich ab, so wird die Geschwindigkeit des auszubringenden, flüssigen Lebensmittels entsprechend verändert, insbesondere verringert oder erhöht. Hierdurch lässt sich insbesondere durch die Transportgeschwindigkeit des flüssigen Lebensmittels durch den Dispensor die Austrittstemperatur beim Austreten aus dem Behälter bzw. aus dem Auslass regeln und steuern. Ggf. ist zwischen Auslass und Behälter ein Zwischenspeicher vorgesehen, um die Pasteurisierungszeit zu verlängern. Dieser kann über eine zusätzliche Rücklaufleitung zum Fortsetzen des Pasteurisierens bzw. zur Verlängerung der Pasteurisierungszeit des darin befindlichen, flüssigen Lebensmittels wieder mit der Zuführleitung bwz. Dosierpumpe verbunden sein.

Bei der vorliegenden Erfindung ist besonders vorteilhaft, das zum Kalibrieren und auch zum permanenten Betreiben des Dispensors die Temperatur vom Zwischenspeicher oder im Bereich dessen Zuführleitung gemessen wird und mit der Temperatur des aus der Spirale oder des Auslasses austretenden Temperatur der Flüssigkeit verglichen wird. Anhand dieser Temperaturdifferenz lässt sich die Durchflussmenge bei wählbarer und vorgegebener Pasteurisierungszeit und Verweildauer im Behälter bestimmen, in welcher das Nahrungsmittel bzw. mit welcher Geschwindigkeit das Nahrungsmittel vom Vorratsbehälter zum Auslass diskontinuierlich transportiert werden soll. Hierdurch lässt sich ein Pasteurisierungsprozess optimieren.

In einem weiteren Ausführungsbeispiel der vorliegenden Erfindung soll auch daran gedacht sein, die Flüssigkeitsquelle vor der Dosierpumpe vorzusehen, wobei bspw. im Zwischenspeicher und/oder in der Zuführleitung ein Flüssigkeitstemperatursensor zur Bestimmung und Ermittlung der Temperatur vorgesehen sein kann. Ferner sei auch daran gedacht, dass bspw. eine Mehrzahl von Zwischenspeicher hintereinander geschaltet oder sternförmig jeweils einzeln und separat ansteuerbar an einen Behälter mit integrierter Rohrspirale anschliessen, um bspw. eine Verweildauer zum Pasteurisieren zu verlängern und vorzugsweise nacheinander eine Mehrzahl von Zwischenspeicher in oben beschriebener Weise zu befüllen. Zur Verlängerung der Pasteurisierungszeit hat sich als vorteilhaft erwiesen, dem Zwischenspeicher eine Ergänzungsheizung zuzuordnen, um die Flüssigkeit auf Pasteurisierungstemperatur zu halten. Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf einen erfindungsgemässen Dispensor zum Aufheizen von flüssigem Nahrungsmittel;
Figur 2 eine schematisch dargestellte Draufsicht auf einen weiteren Dispensor zum Aufheizen von flüssigem Nahrungsmittel als weiteres Ausführungsbeispiel gemäss Figur 1;
Figur 3 eine schematisch dargestellte Draufsicht auf ein noch weiteres Ausführungsbeispiel des Dispensors gemäss den Figuren 1 und 2;
Figur 4 eine schematisch dargestellte Draufsicht auf ein weiteres Ausführungsbeispiel eines Dispensors mit nachgeschaltetem Zwischenspeicher;
Figur 5 eine schematisch dargestellte Draufsicht auf ein erweitertes Ausführungsbeispiel des Dispensors gemäss Figur 4;
Figur 6 eine schematisch dargestellte Draufsicht auf ein noch weiteres Ausführungsbeispiel des Dispensors gemäss den Figuren 4 und 5.

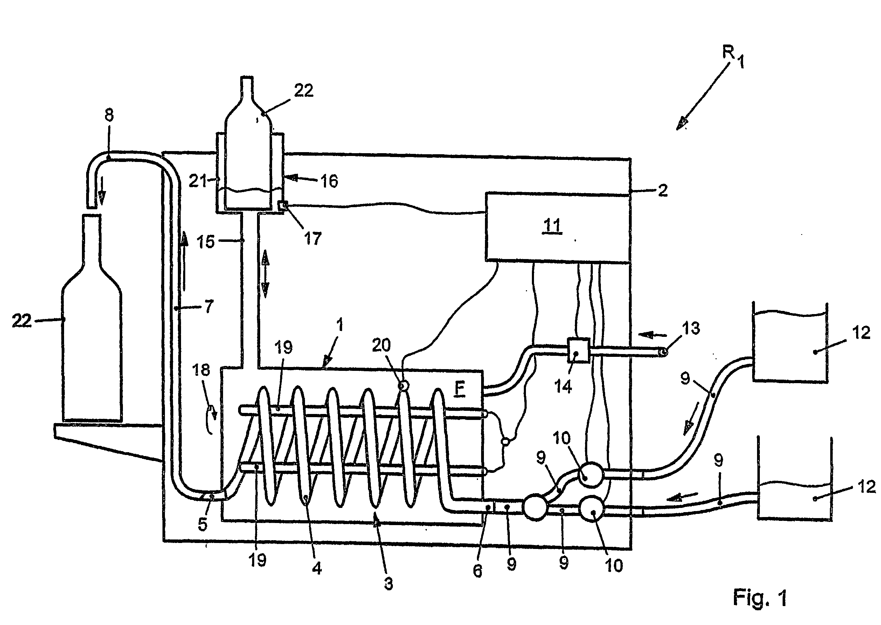

Gemäss Figur 1 weist ein erfindungsgemässer Dispensor R₁ für flüssige Lebensmittel, Getränke, insbesondere Säfte einen Behälter 1 auf, der vorzugsweise in einem Gehäuse 2 des Dispensors R₁ in etwa waagrecht angeordnet ist. Innerhalb des Behälters 1 ist eine Einrichtung 3, insbesondere Rohrspirale 4 eingesetzt, die jeweils Anschlüsse 5, 6 nach aussen hin jeweils beidseitig und stirnseitig aufweist.

An den Anschluss 5 schliesst eine Leitung 7 an und mündet in einen Auslass 8 zum Abfüllen von beispielsweise Flaschen.

Andernends des Behälters 1 am Auslass 6 schliesst im vorliegenden Ausführungsbeispiel zumindest eine Zuführleitung 9 mit dazwischen eingesetzter Dosierpumpe 10 an. Die Dosierpumpe 10 ist mit einer Steuerung 11 verbunden.

An die Dospierpumpen 10 können jeweils Vorratsbehälter 12 anschliessen oder angeschlossen werden, die der Aufnahme des Nahrungsmittels, beispielsweise des Saftes, der Milch, des Getränkes dienen.

Zusätzlich ist an dem Behälter 1 eine Flüssigkeitsquelle 13 angeschlossen, die über ein Ventil 14 betätigbar ist. Bevorzugt ist die Flüssigkeitsquelle 13 ein Wasseranschluss, um den Behälter 1 nachzufüllen. Dies geschieht durch entsprechende Ansteuern des Ventiles 14 mittels der Steuerung 11.

Zum Erkennen des Befüllstandes des Behälters 1 ist im vorliegenden Ausführungsbeispiel an diesen über eine Verbindungsleitung 15 ein Ausgleichsbehälter 16 angeschlossen. Dabei befindet sich bevorzugt im Bereich des Ausgleichsbehälters 16 ein Füllstandssensor 17, der mit der Steuerung 11 in Verbindung steht. Unterschreitet ein Flüssigkeitspiegel im Ausgleichsbehälter 16 den Füllstandssensor 17, so wird über die Steuerung 11 das Ventil 14 aktiviert und die Flüssigkeitsquelle 13 gleicht den Füllstand im Behälter 1 bzw. Verbindungsleitung 15 und Ausgleichsbehälter 16 aus, bis ein gewählter Füllstand wieder erreicht ist.

Wie ferner aus Figur 1 hervorgeht, ist in dem Behälter 1 die Einrichtung 3 als Rohrspirale 4 eingesetzt, die in einer Wickelrichtung 18 sich durch den Behälter 1 erstreckt. Der Behälter 1 kann querschnittlich zylinderartig ausgebildet sein.

Bevorzugt innerhalb der Rohrspirale 4 ist wenigstens ein über die Steuerung 11 ansteuerbares Heizelement 19 eingesetzt.

Das Heizelement 19 dient zum Aufheizen einer Flüssigkeit F. Die Flüssigkeit F wiederum erwärmt die Einrichtung 3 bzw.

Rohrspirale 4. Um deren Temperatur zu bestimmen ist dieser zumindest ein Temperatursensor 20 zugeordnet.

Als besonders vorteilhaft hat sich ferner beim vorliegenden Dispensor R₁ erwiesen, den Ausgleichsbehälter 16 als Vorwärmeinrichtung 21 auszubilden, der nach oben hin geöffnet ist. In diese Vorwärmeinrichtung 21 lässt sich ein Aufnahmebehälter 22 einstellen. Beispielsweise kann der Aufnahmebehälter 22 als Flasche, als Becher, als Tasse od. dgl. ausgebildet sein.

Dieser lässt sich in der Vorwärmeinrichtung 21 über die im Behälter 1 befindliche Flüssigkeit F mittels den Heizelementen 19 aufheizen.

Die Funktionsweise des vorliegenden Ausführungsbeispiels ist folgende:

Flüssiges Lebensmittel, welches in zumindest einem Vorratsbehälter 12 gelagert ist, gelangt über die Zuführleitung 9 in den Dispensor 1. Hierzu kann die entsprechende Dosierpumpe 10 eine wählbare und bestimmbare Menge an flüssigem Lebensmittel schubweise der Einrichtung 3, insbesondere der Rohrspirale 4 zuführen. Innerhalb des Behälters 1 wird das flüssige Lebensmittel auf eine bestimmbare Temperatur erhitzt. Bevorzugt ist jedoch daran gedacht, das flüssige Lebensmittel auf eine Pasteurisierungstemperatur zu erhitzen, um es dann anschliessend über die Leitung 7 und den Auslass 8 einem Aufnahmebehälter 22, einer Flasche oder einem Trinkgefäss od. dgl. zuzuführen.

Damit die heisse Flüssigkeit, das heisse Lebensmittel aus dem Auslass 8 nicht in kalte Aufnahmebehälter 22, insbesondere Flaschen ausgebracht wird, können diese vorher in der Vorwärmeinrichtung 21 bzw. in dem Ausgleichsbehäler 16 vorgewärmt werden.

Im Rahmen der vorliegenden Erfindung soll jedoch auch liegen, den Ausgleichsbehälter 16 separat an den Behälter 1 anzuschliessen bzw. die Vorwärmeinrichtung 21 eigenständig an den Behälter 1 anzuschliessen. Hierauf sei die Erfindung nicht beschränkt.

Hierdurch lässt sich manuell, beispielsweise Saft pasteuerisieren oder beispielsweise Glühwein in wählbaren Temperaturbereichen schnell und energiesparend erhitzen.

Auch soll daran gedacht sein, eine Mehrzahl von unterschiedlichen Vorratsbehälter 12 mit jeweils separaten, eigenständigen Dosierpumpen an den Dispensor R₁ anzuschliessen, um beispielsweise bestimmte flüssige Nahrungsmittel in gewünschten Mischungsverhältnissen zu mischen und anschliessend über die Einrichtung 3, insbesondere Rohrspirale 4 auf eine wählbare und gewünschte Temperatur zu erhitzen.

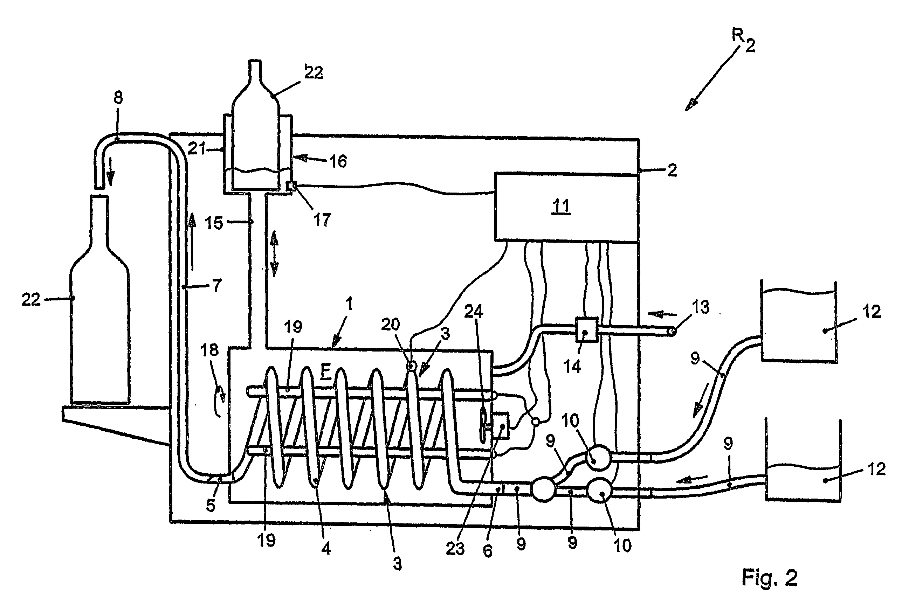

In dem Ausführungsbeispiel der vorliegenden Erfindung gemäss Figur 2 ist ein Dispensor R₂ aufgezeigt, bei welchem vorzugsweise stirnseitig an den Behälter 1 ein Antriebsmotor 23 anschliesst, welcher zumindest ein Flügelelement 24 aufweist. Das Flügelelement 24 ragt bevorzugt stirnseitig in den Behälter 1 ein und erzeugt eine Strömung, insbesondere Verwirbelung und Bewegung der Flüssigkeit F im Behälter 1. Hierdurch erfolgt ein schnelles Erhitzen des flüssigen Lebensmittels in der Rohrspirale 4.

Dabei soll im Rahmen der vorliegenden Erfindung liegen, auch im Gleich- oder Gegenstromverfahren die Flüssigkeit F innerhalb des Behälters 1 zu bewegen, insbesondere zu beschleunigen, um den Wärmeübergang der Flüssigkeit F auf die Rohrspirale 4 zu optimieren.

Der Antriebsmotor 23 lässt sich ebenfalls über die Steuerung 11 betreiben, ggf. auch in Abhängigkeit der Temperatur, die über den Temperatursensor 20 an der Rohrspirale 4 gemessen wird. Ist ein schnelles Erhitzen erwünscht, so lässt sich beispielsweise eine höhere Drehzahl des Flügelelementes 24 über die Steuerung 11 ermöglichen.

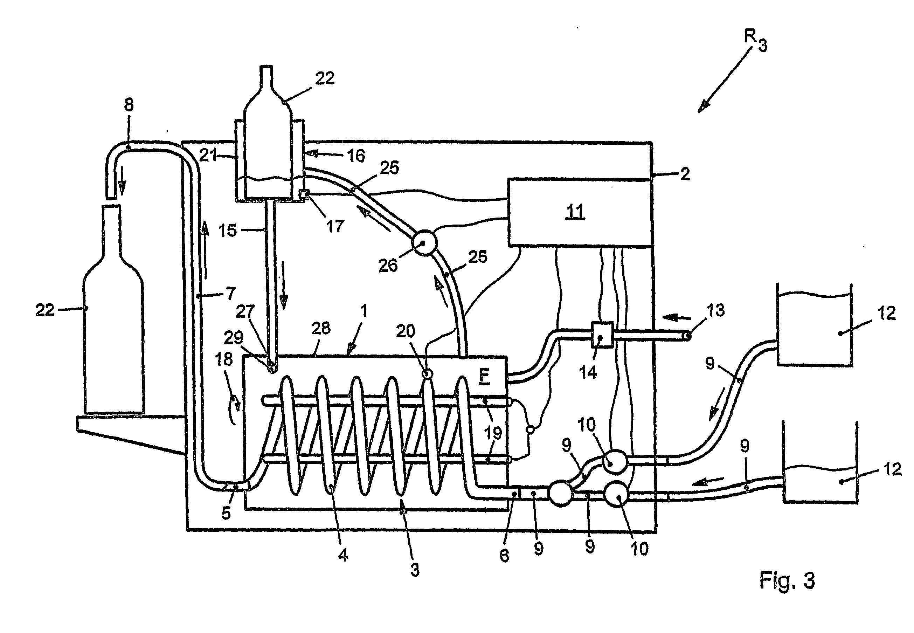

In dem Ausführungsbeispiel der vorliegenden Erfindung gemäss Figur 3 ist ein Dispensor R₃ beschrieben, der in etwa die o.g. beschriebenen Bauteile aufweist. Unterschiedlich ist hier, dass zusätzlich zwischen Vorwärmeinrichtung 21 bzw. Ausgleichsbehälter 16 und dem Behälter 1 eine Zirkulationsleitung 25 mit eingesetzter Zirkulationspumpe 26 eingesetzt ist, die ebenfalls über die Steuerung 11 betätigbar ist.

Wichtig ist auch, dass insbesondere die hier nicht näher bezifferten Anschlüsse an den Behälter 1 von Verbindungsleitung 15 und von Zirkulationsleitung 25 im Behälter 1 weitmöglichst auseinanderliegen.

Bevorzugt greift die Verbindungsleitung 15 über einen Einlass 28 radial durch ein Zylinderelement 28 des Behälters 1 radial ein, wobei eine Öffnung 29 des Einlasses 27 im Behälter 1 bzw. zum Zylinderelement 28 radial ausgerichet ist.

Um die Zirkulation im Behälter 1 der Flüssigkeit F zu optimieren, lässt sich die Zirkulationspumpe 26 betätigen und pumpt vorzugsweise im Gleich- oder Gegenstromverfahren zur Transportrichtung des flüssigen Nahrungsmittels die über das Heizelement 19 im Behälter 1 erwärmte Flüssigkeit F über die Zirkulationsleitung 25 in den Ausgleichsbehälter 16 und/oder Vorwärmeinrichtung 21 über die Verbindungsleitung 15 in den Behälter 1. Durch das radiale Ausrichten des Einlasses 27 bzw. der Öffnung 29 lässt sich eine radiale und axiale Strömung, insbesondere im Gleich- oder Gegenstromverfahren im Behälter 1 erzeugen, um einen optimalen Wärmeübergang der Flüssigkeit F auf die Rohrspirale 4 und das darin zum Auslass 8 transportierte Nahrungsmittel zu gewährleisten. Zusätzlich kann in diesem Behälter 1 auch zur weiteren Unterstützung der Bewegung der Flüssigkeit F bzw. Zirkulation, der Antriebsmotor 23 mit in den Behälter 1 eingreifenden Flügelelement 24, wie es in Figur 2 angedeutet ist, auch hier zusätzlich oder alternativ in den Behälter 1 eingesetzt sein.

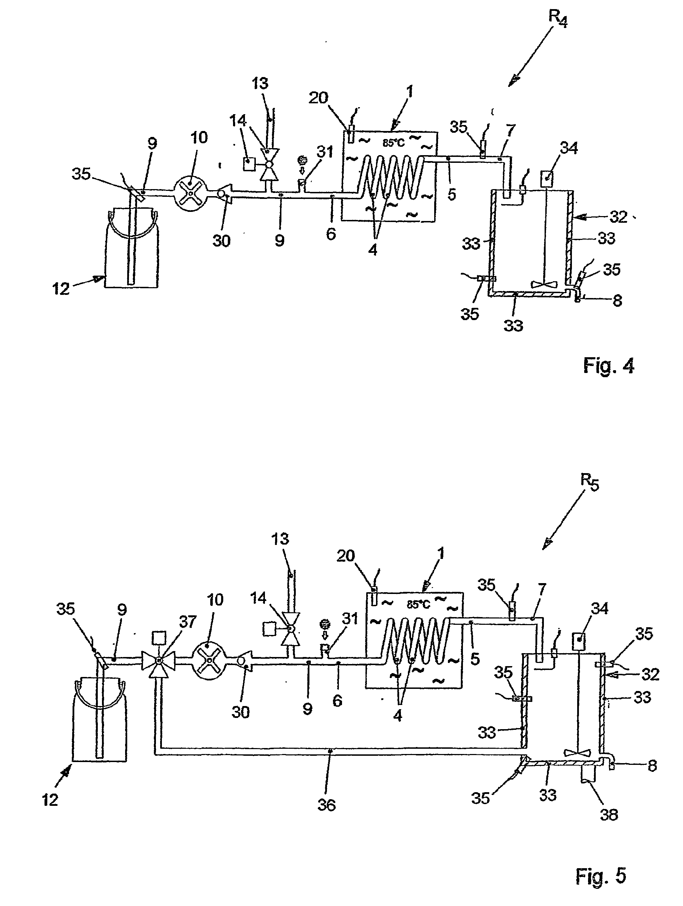

In einem weiteren Ausführungsbeispiel der vorliegenden Erfindung gemäss Figur 4 ist ein Dispensor R₄ aufgezeigt, der im wesentlichen die oben beschriebenen Bauteile, wie Vorratsbehälter 12, Behälter 1 und Auslass 8 aufweist. In dem Vorratsbehälter 12, der auch eine Milchkanne sein kann, ragt die Zuführleitung 9 ein und entnimmt über eine Dosierpumpe 10, die vorzugsweise als Kreiselpumpe ausgebildet ist, das flüssige Nahrungsmittel, insbesondere Milch. Der Dosierpumpe 10 ist ein Rückschlagventil 30 nachgeschaltet. Im Anschluss an das Rückschlagventil 30 mündet in die Leitung 9 die Flüssigkeitsquelle 13, ansteuerbar über ein Ventil 14 ein. Die Flüssigkeitsquelle 13 kann bspw. als Wasserversorgung ausgebildet sein. Anschliessend mündet in die Zuführleitung 9 ein Einlass 31 zur Schwammspülung der Zuführleitung 9 ein, die in den Behälter 1 führt, in welchem in oben beschriebener Weise das schubweise durch die Rohrspirale 4 strömende Nahrungsmittel bzw. flüssige Nahrungsmittel pasteurisiert wird und über die Leitung 7 in einen Zwischenspeicher 32 gelangt.

Bevorzugt ist der Zwischenspeicher 32 von einer Isolierung 33 umgeben, wobei in den Zwischenspeicher 32 ein Rührwerk 34 einragt. Wichtig bei der vorliegenden Erfindung ist, dass im Bereich zwischen dem Anschluss 5 des Behälters 1 und dem Auslass 8 zumindest ein Flüssigkeitstemperatursensor 35 vorgesehen ist, der die Temperatur in der Leitung 7 und/oder im Zwischenspeicher 32 misst. Dabei hat sich als besonders vorteilhaft erwiesen, über die Transportgeschwindigkeit mittels der Dosierpumpe 10 die Pasteurisierungstemperatur im Anschluss 5 und insbesondere in der Leitung 7 zu bestimmen bzw. zu regeln, so dass bei einer niedrigeren Austrittstemperatur die Austrittsgeschwindigkeit verringert wird, um eine Pasteurisierungstemperatur des flüssigen Nahrungsmittel innerhalb der Rohrspirale 4 zu erreichen. Umgekehrt wird die Transportgeschwindigkeit des Nahrungsmittels mittels der Dosierpumpe 10 erhöht, wenn die Temperatur des flüssigen Nahrungsmittels im Anschluss 5 bzw. in der Leitung 7 und/oder im Auslass 8 eine höhere Temperatur erreicht.

Ferner hat sich als vorteilhaft bei der vorliegenden Erfindung erwiesen, dass nach dem Pasteurisieren das flüssige Nahrungsmittel dem Zwischenspeicher 32 zugeführt wird, der dem längeren Warmhalten der Flüssigkeit auf Pasteurisierungstemperatur dient. Hiermit wird der Pasteurisierungsprozess optimiert und die Keime können nahezu vollständig abgetötet werden. Hierdurch lässt sich die Pasteurisierungszeit zum Abtöten aller Keime wesentlich verlängern. Ggf. soll auch daran gedacht sein, den Zwischenspeicher 32 zusätzlich über hier nicht näher dargestellte Heizeinrichtungen zu beheizen.

In einem weiteren Ausführungsbeispiel der vorliegenden Erfindung ist der Zwischenspeicher 32 über eine zusätzliche Rücklaufleitung 36 mit der Zuführleitung 9 verbunden und mündet vor der Dosierpumpe 10 in diese ein. Ein Mehrwegeventil 37 steuert ggf. auch temperaturabhängig ein erneutes Zuführen des erneut zu pasteurisierenden, flüssigen Nahrungsmittels aus dem Zwischenspeicher 32 in die Zuführleitung 9 zur Fortsetzung bzw. Verlängerung des Pasteurisierens im Behälter 1. Dies soll ebenfalls im Rahmen der vorliegenden Erfindung liegen.

Es hat sich als vorteilhaft bei der vorliegenden Erfindung erwiesen, dass zur Optimierung des Pasteurisierungsprozesses des flüssigen Lebensmittels dieses schubweise in die Rohrspirale 4 eingebracht wird und dieses bis zur Pasteurisierungstemperatur temperiert wird und anschliessend schubweise aus dem Behälter 1 bzw. aus der Rohrspirale 4 direkt dem Auslass 8 oder indirekt, ggf. über den Zwischenspeicher 32, dem Auslass 8 zum Befüllen von Flaschen od. dgl. ausgebracht wird. Hiermit wird die Einwirkzeit zum Pasteurisieren erhöht, und ein Durchsatz an zu pasteurisierendem, flüssigem Lebensmittel gesteigert.

Ferner hat sich als vorteilhaft bei der vorliegenden Erfindung erwiesen, dass bspw. chargenweise von einem Bruchteil oder einem Vielfachen eines abzufüllenden Behälters, einer Flasche od. dgl., an flüssigen Lebensmittel in die Rohrspirale 4 schubweise eingebracht wird und in kleinen Schüben, vorzugsweise kleiner als das Gesamtvolumen oder eines Bruchteiles des Inhaltes der Rohrspirale 4 die Flüssigkeit abgefüllt wird. Die hierdurch resultierenden, längere Einwirkzeiten und bessere Wärmeübertragungen sowie eine bessere Durchmischung und damit eine bessere Pasteurisierung.

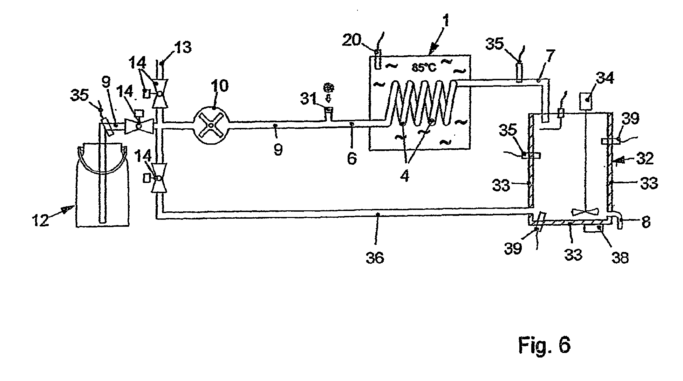

In dem Ausführungsbeispiel der vorliegenden Erfindung gemäss Figur 6 ist ein Dispensor R₆ aufgezeigt, der im wesentlichen der o. g. Art entspricht. Unterschiedlich ist hier, dass die Flüssigkeitsquelle 13 vor der Dosierpumpe 10 in die Zuführleitung 9 einmündet. Dabei ist die Flüssigkeitsquelle 13 über ein Ventil 14 separat ansteuerbar. Ebenfalls ist die Zuführleitung 9 vor der Dosierpumpe 10 über ein weiteres Ventil 14 separat zuschaltbar.

Gleiches gilt auch für die Rücklaufleitung 36 in welcher ebenfalls ein Ventil 14 eingesetzt ist. Die Rücklaufleitung 36 mündet ebenfalls zwischen Ventil 14 der Zuführleitung 9 und Dosierpumpe 10 in diese ein.

In dieser Anordnung kann das Rückschlagventil 30, wie es in den Figuren 4 und 5 dargestellt ist, entfallen.

Ferner ist von Vorteil bei der vorliegenden Erfindung, dass zusätzlich der Zuführleitung 9, ggf. auch, hier nicht dargestellt, dem Vorratsbehälter 12 ein Flüssigkeitstemperatursensor 35 zugeordnet ist. Der zusätzliche Flüssigkeitstemperatursensor 35 misst in der Zuführleitung 9 die Temperatur der Flüssigkeit, die aus dem Vorratsbehälter 12 in den Dispensor R₆ gelangt. Unter Berücksichtigung dieser Eintrittstemperatur, bei einer wählbaren oder vorgegebenen Pasteurisierungszeit bzw. Verweildauer im Behälter und bei einer wählbaren und einstellbaren Austrittstemperatur im Bereich der Leitung 7 bzw. am Auslass 8 und/oder im Zwischenspeicher 32 lässt sich die diskontinuierliche Geschwindigkeit des Nahrungsmittels mittels der Dosierpumpe 10 steuern, welche den Behälter 1 zum Pasteurisieren durchströmt, um ein optimales Pasteurisieren zu gewährleisten. Auch ein Kalibrieren ist auf diese Weise möglich, in dem bspw. ein Testlauf mit Wasser oder Nahrungsmittel durchgeführt wird, um die exakte. Zeit in welcher das flüssige Nahrungsmittel den Dispensor durchströmt zu bestimmen, wobei die Eingangs- und Ausgangstemperaturen sowie auch die Pasteurisierungszeit als Verweildauer mit berücksichtigt werden. Daher bestimmt die Einlauftemperatur im Bereich der Zuführleitung 9 und die wählbare Wartezeit bzw. Pasteurisierungszeit die Durchlaufzeit bzw. Geschwindigkeit durch die Rohrspirale 4.

Daher bestimmen Anfangstemperatur und Ausgangstemperatur die Gesamtpasteurisierungszeiten, wobei die Taktgeschwindigkeit bei einer wählbaren Verweildauer in der Spirale 4 und/oder im Zwischenspeicher 32 die Taktgeschwindigkeiten bestimmen und sich hierüber regeln und auch kalibrieren lassen.

Ferner können, wie es insbesondere in Figur 6 dargestellt ist, den Zwischenspeicher 32 mehrere Füllstandssensoren 39 zugeordnet sein, die einen maximalen Füllstand oder einen Leerstand anzeigen. Die Füllstandssensoren 39 können entweder einen Wechsel des zu befüllenden Zwischenspeichers 32 oder ein Abfüllen der Flüssigkeit nach erreichter Pasteurisierungszeit anzeigen. Sollte der Zwischenspeicher 32 nicht vollständig gefüllt sein, kann über die Rücklaufleitung 36 das zu pasteurisierende Nahrungsmittel zum Fortsetzen des Pasteurisierens wieder durch den Behälter 1 bzw. durch die Rohrspirale 4 geführt werden.

**Positionszahlenliste**

| | | | | | |
|---|---|---|---|---|---|
| 1 | Behälter | 34 | Rührwerk | 67 | |
| 2 | Gehäuse | 35 | Flüssigkeitstemperatursensor | 68 | |
| 3 | Einrichtung | 36 | Rücklaufleitung | 69 | |
| 4 | Rohrspirale | 37 | Mehrwegeventil | 70 | |
| 5 | Anschluss | 38 | Ergänzungsheizung | 71 | |
| 6 | Anschluss | 39 | Füllstandssensor | 72 | |
| 7 | Leitung | 40 | | 73 | |
| 8 | Auslass | 41 | | 74 | |
| 9 | Zuführleitung | 42 | | 75 | |
| 10 | Dosierpumpe | 43 | | 76 | |
| 11 | Steuerung | 44 | | 77 | |
| 12 | Vorratsbehälter | 45 | | 78 | |
| 13 | Flüssigkeitsquelle | 46 | | 79 | |
| 14 | Ventil | 47 | | | |
| 15 | Verbindungsleitung | 48 | | | |
| 16 | Ausgleichsbehälter | 49 | | R₁ | Dispensor |
| 17 | Füllstandssensor | 50 | | R₂ | Dispensor |
| 18 | Wickelrichtung | 51 | | R₃ | Dispensor |
| 19 | Heizelement | 52 | | R₄ | Dispensor |
| 20 | Temperatursensor | 53 | | R₅ | Dispensor |
| 21 | Vorwärmeinrichtung | 54 | | R₆ | Dispensor |
| 22 | Aufnahmebehälter | 55 | | F | Flüssigkeit |
| 23 | Antriebsmotor | 56 | | | |
| 24 | Flügelelement | 57 | | | |
| 25 | Zirkulationsleitung | 58 | | | |
| 26 | Zirkulationspumpe | 59 | | | |
| 27 | Einlass | 60 | | | |
| 28 | Zylinderelement | 61 | | | |
| 29 | Öffnung | 62 | | | |
| 30 | Rückschlagventil | 63 | | | |
| 31 | Einlass | 64 | | | |
| 32 | Zwischenspeicher | 65 | | | |
| 33 | Isolierung | 66 | | | |

## Patentansprüche

1. Dispensor für flüssige Lebensmittel, Getränke, insbesondere Säfte, wobei eine in einem Behälter (1) angeordnete Einrichtung (3) zum Transportieren des flüssigen Lebensmittels, insbesondere Rohrspirale (4) von einer die Einrichtung (3) aufheizenden Flüssigkeit (F) umgeben ist,
**dadurch gekennzeichnet,**
**dass** die Temperatur des flüssigen Lebensmittels mittels zumindest eines Flüssigkeitstemperatursensors (35) zwischen einem Anschluss (5) und einem Auslass (8) und/oder zwischen einem Vorratsbehälter (12) und einem Anschluss (6) bestimmbar ist und über die Temperaturdifferenz und/oder Pasteurisierungszeit im Behälter (1) die Taktzeit des flüssigen Lebensmittels mittels einer Steuerung regelbar ist und das flüssige Lebensmittel schubweise die Rohrspirale (4) des Behälters (1) durchströmt.

2. Dispensor nach Anspruch 1, **dadurch gekennzeichnet, dass** zwischen Auslass (8) und Behälter (1) zumindest ein Zwischenspeicher (32) vorgesehen ist.

3. Dispensor nach Anspruch 1 oder 2, **dadurch gekennzeichnet, dass** die Flüssigkeit (F) zur Erwärmung der Einrichtung (3) im Behälter (1) bewegbar ist.

4. Dispensor nach Anspruch 3, **dadurch gekennzeichnet, dass** zur radialen und/oder axialen Umwälzung der Flüssigkeit (F) im Behälter (1) diese in etwa radial in den Behälter (1) einströmt oder zirkuliert.

5. Dispensor nach Anspruch 3, **dadurch gekennzeichnet, dass** die Flüssigkeit (F) in oder entgegen einer Wickelrichtung (18) der Rohrspirale (4) in etwa radial in den Behälter (1) einströmt.

6. Dispensor nach wenigstens einem der Ansprüche 1 bis 5, **dadurch gekennzeichnet, dass** zumindest eine Öffnung (29) des Einlasses (27) im Behälter (1) in etwa radial bis axial ausgerichtet ist und im Bereich eines Zylinderelementes (28) angeordnet ist.

7. Dispensor nach wenigstens einem der Ansprüche 1 bis 6, **dadurch gekennzeichent, dass** an dem Behälter (1) über eine Verbindungsleitung (15) ein Ausgleichsbehälter (16) anschliesst.

8. Dispensor nach Anspruch 7, **dadurch gekennzeichnet, dass** der Ausgleichsbehälter (16) als Vorwärmeinrichtung (21) zum Aufnehmen wenigstens eines Aufnahmebehälters (22) ausgebildet ist.

9. Dispensor nach Anspruch 7 oder 8, **dadurch gekennzeichnet, dass** zwischen Ausgleichsbehälter (16) und Behälter (1) eine zusätzliche Zirkulationsleitung (25) mit eingesetzter Zirkulationspumpe (26) vorgesehen ist.

10. Dispensor nach Anspruch 9, **dadurch gekennzeichnet, dass** ein Bewegen der Flüssigkeit (F) im Behälter (1) durch Aktivieren der Zirkulationspumpe (26) erfolgt und die Flüssigkeit (F) über die Zirkulationsleitung (25) zum Ausgleichsbehälter (16) gelangt und von dort über die Verbindungsleitung (15) zirkulierend dem Behälter (1) zuführbar ist.

11. Dispensor nach wenigstens einem der Ansprüche 1 bis 10, **dadurch gekennzeichnet, dass** die Flüssigkeit (F) zur Erwärmung der Einrichtung (3) im Behälter (1) mittels eines antreibbaren Flügelelementes (24) in Bewegung, insbesondere in Zirkulation versetzbar ist.

12. Dispensor nach Anspruch 11, **dadurch gekennzeichnet, dass** das Flügelelement (24) über einen Antriebsmotor (23) antreibbar ist und das Flügelement (24) und Antriebsmotor (23) stirnseitig dem Behälter (1) mittig oder aussermittig angeordent sind.

13. Dispensor nach wenigstens einem der Ansprüche 1 bis 12, **dadurch gekennzeichnet, dass** dem Behälter (1), insbesondere der Einrichtung (3) zumindest ein Heizelement (19) zugeordnet ist.

14. Dispensor nach wenigstens einem der Ansprüche 1 bis 13, **dadurch gekennzeichnet, dass** an die Einrichtung (3) zumindest eine Zuführleitung (9) mit einer eingesetzten Dosierpumpe (10) anschliesst, wobei an zumindest eine Zuführleitung (9) ein Vorratsbehälter (12) für Lebensmittel, Getränke oder Säfte anschliessbar ist.

15. Dispensor nach wenigstens einem der Ansprüche 7 bis 14, **dadurch gekennzeichnet, dass** dem Ausgleichsbehälter (16) ein Füllstandssensor (17) zugeordnet ist.

16. Dispensor nach Anspruch 15, **dadurch gekennzeichnet, dass** auf ein entsprechendes Signal des Füllstandssensors (17) direkt oder über eine Steuerung (11) ein Ventil (14) schaltbar ist, um eine an den Behälter (1) angeschlossene Flüssigkeitsquelle (13) zu aktivieren.

17. Dispensor nach wenigstens einem der Ansprüche 1 bis 16, **dadurch gekennzeichnet, dass** der Einrichtung (3), insbesondere der Rohrspirale (4) ein Temperatursensor (20) zugeordnet ist.

18. Dispensor nach wenigstens einem der Ansprüche 1 bis 17, **dadurch gekennzeichnet, dass** zumindest in eine Zuführleitung 9 eine Dosierpumpe 10 eingesetzt ist und das flüssige Lebensmittel schubweise durch den Behälter (1), insbesondere durch dessen Rohrspirale (4) zum Auslass (8) befördert.

19. Dispensor nach wenigstens einem der Ansprüche 2 bis 18, **dadurch gekennzeichnet, dass** im Bereich des Anschlusses (5) des Behälters (1) und/oder im Zwischenspeicher (32) und/oder im Bereich des Auslasses (8) zumindest ein Flüssigkeitstemperatursensor (35) vorgesehen ist, der die Temperatur des flüssigen Lebensmittels ermittelt und bei Abweichen von einer Pasteurisierungstemperatur eine Transportgeschwindigkeit des flüssigen Nahrungsmittels mittels der Dosierpumpe (10) veränderbar ist.

20. Dispensor nach wenigstens einem der Ansprüche 2 bis 19, **dadurch gekennzeichnet, dass** zwischen dem Zwischenspeicher (32) und dem Vorratsbehälter (12) eine Rücklaufleitung (36) eingesetzt ist, wobei die Rücklaufleitung (36) zwischen Dosierpumpe (10) und Vorratsbehälter (12) in die Zuführleitung (9) einmündet.

21. Dispensor nach wenigstens einem der Ansprüche 1 bis 20, **dadurch gekennzeichnet, dass** zwischen Vorratsbehälter (12) und Anschluss (6), insbesondere in der Zuführleitung (9) zumindest ein Flüssigkeitstemperatursensor (35) zur Bestimmung der Temperatur des flüssigen Nahrungsmittels aus dem Vorratsbehälter (12) vorgesehen ist.

22. Dispensor nach wenigstens einem der Ansprüche 2 bis 21, **dadurch gekennzeichnet, dass** dem zumindest einen Zwischenspeicher (32) zumindest eine Ergänzungsheizung (38) zum Halten der Pasteurisierungstemperatur des flüssigen Nahrungsmittels zugeordnet ist.

23. Dispensor nach wenigstens einem der Ansprüche 1 bis 22, **dadurch gekennzeichnet, dass** durch die Bestimmung der Temperatur des Lebensmittels im Bereich des Vorratsbehälters (12) und/oder im Bereich der Zuführleitung (9) mittels zumindest einem Flüssigkeitstemperatursensor (35) eine gewünschte Pasteurisierungstemperatur im Bereich zwischen Leitung (7) und Auslass (8) unter Berücksichtigung der Pasteurisierungszeit im Zwischenspeicher (32) und/oder im Behälter (1) bzw. in der Rohrspirale (4), die Durchlaufzeit bzw. Taktzeit der zur pasteurisierenden Flüssigkeit einstellbar, insbesondere regelbar ist.

24. Dispensor nach wenigstens einem der Ansprüche 2 bis 23, **dadurch gekennzeichnet, dass** auf ein Signal, zumindest eines Füllstandssensors (39) im Zwischenspeicher (32) hin die Flüssigkeit über die Rücklaufleitung (36) zum Fortsetzen des Pasteurisierens dem Behälter (1) wieder zuführbar ist.

## Claims

1. Dispenser for liquid foodstuffs, or drinks, more especially juices, an apparatus (3), more especially a tubular coil (4), disposed in a container (1) for the conveyance of the liquid foodstuff, being surrounded by a fluid (F) which heats up the apparatus (3), **characterised in that** the temperature of the liquid foodstuff is determinable by means of at least one fluid temperature sensor (35) between a connection (5) and an outlet (8) and/or between a storage container (12) and a connection (6), and the phase time of the liquid foodstuff is adjustable by means of a control system via the temperature difference and/or pasteurisation time in the container (1), and the liquid foodstuff flows gradually through the tubular coil (4) of the container (1).

2. Dispenser according to claim 1, **characterised in that** at least one intermediate storage unit (32) is provided between the outlet (8) and the container (1).

3. Dispenser according to claim 1 or 2, **characterised in that** the fluid (F) for heating the apparatus (3) is displaceable in the container (1).

4. Dispenser according to claim 3, **characterised in that**, for the radial and/or axial circulation of the fluid (F) in the container (1), said fluid flows substantially radially into the container (1) or circulates therein.

5. Dispenser according to claim 3, **characterised in that** the fluid (F) flows into the container (1) substantially radially in or in opposition to a winding direction (18) of the tubular coil (4).

6. Dispenser according to at least one of claims 1 to 5, **characterised in that** at least one opening (29) of the inlet (27) in the container (1) is orientated substantially radially to axially, and is disposed in the region of a cylinder element (28).

7. Dispenser according to at least one of claims 1 to 6, **characterised in that** an equalising container (16) communicates with the container (1) via a connection pipe (15).

8. Dispenser according to claim 7, **characterised in that** the equalising container (16) is in the form of a preheating apparatus (21) for the accommodation of at least one receiving container (22).

9. Dispenser according to claim 7 or 8, **characterised in that** an additional circulation pipe (25), having a circulation pump (26) inserted therein, is provided between the equalising container (16) and the container (1).

10. Dispenser according to claim 9, **characterised in that** a movement of the fluid (F) in the container (1) is effected by activating the circulation pump (26), and the fluid (F) passes to the equalising container (16) via the circulation pipe (25), and is suppliable from there to the container (1) via the connection pipe (15) in a circulating manner.

11. Dispenser according to at least one of claims 1 to 10, **characterised in that** the fluid (F) for heating the apparatus (3) in the container (1) can be set in motion, more especially in circulation, by means of a drivable vane element (24).

12. Dispenser according to claim 11, **characterised in that** the vane element (24) is drivable via a driving motor (23), and the vane element (24) and driving motor (23) are disposed centrally or eccentrically on the end face of the container (1).

13. Dispenser according to at least one of claims 1 to 12, **characterised in that** at least one heating element (19) is associated with the container (1), more especially with the apparatus (3).

14. Dispenser according to at least one of claims 1 to 13, **characterised in that** at least one feed pipe (9), having a metering pump (10) inserted therein, communicates with the apparatus (3), a storage container (12) for foodstuffs, drinks or juices been communicatable with at least one feed pipe (9).

15. Dispenser according to at least one of claims 7 to 14, **characterised in that** a filling level sensor (17) is associated with the equalising container (16).

16. Dispenser according to claim 15, **characterised in that**, in response to an appropriate signal from the filling level sensor (17), a valve (14) is switchable directly or via a control system (11), in order to activate a source of fluid (13) connected to the container (1).

17. Dispenser according to at least one of claims 1 to 16, **characterised in that** a temperature sensor (20) is associated with the apparatus (3), more especially with the tubular coil (4).

18. Dispenser according to at least one of claims 1 to 17, **characterised in that** a metering pump (10) is inserted into at least one feed pipe (9) and conveys the liquid foodstuff gradually through the container (1), more especially through the tubular coil (4) thereof, to the outlet (8).

19. Dispenser according to at least one of claims 2 to 18, **characterised in that** at least one fluid temperature sensor (35) is provided in the region of the connection (5) of the container (1) and/or in the intermediate storage unit (32) and/or in the region of the outlet (8), which sensor determines the temperature of the liquid foodstuff and, in the event of a deviation from a pasteurising temperature, a conveying speed for the liquid nutriment is changeable by means of the metering pump (10).

20. Dispenser according to at least one of claims 2 to 19, **characterised in that** a return pipe (36) is inserted between the intermediate storage unit (32) and the storage container (12), the return pipe (36) terminating in the feed pipe (9) between the metering pump (10) and the storage container (12).

21. Dispenser according to at least one of claims 1 to 20, **characterised in that** at least one fluid temperature sensor (35) is provided between the storage container (12) and the connection (6), more especially in the feed pipe (9), for determining the temperature of the liquid nutriment from the storage container (12).

22. Dispenser according to at least one of claims 2 to 21, **characterised in that** at least one supplementary heater (38) for maintaining the pasteurising temperature of the liquid nutriment is associated with the at least one intermediate storage unit (32).

23. Dispenser according to at least one of claims 1 to 22, **characterised in that**, by determining the temperature of the foodstuff in the region of the storage container (12) and/or in the region of the feed pipe (9) by means of at least one fluid temperature sensor (35), a desired pasteurising temperature can be set, more especially can be regulated, in the region between the pipe (7) and the outlet (8), in consideration of the pasteurising time in the intermediate storage unit (32) and/or in the container (1) or respectively in the tubular coil (4), and in consideration of the transit time or phase time respectively.

24. Dispenser according to at least one of claims 2 to 23, **characterised in that**, in response to a signal, at least from a filling level sensor (39) in the intermediate storage unit (32), the fluid can be supplied again to the container (1) via the return pipe (36) for the continuation of the pasteurising process.

## Revendications

1. Distributeur de denrées alimentaires liquides, de boissons, en particulier de jus, un dispositif (3) destiné au transport des denrées alimentaires liquides, en particulier un tube en spirale (4), disposé dans un conteneur (1) étant entouré d'un liquide (F) réchauffant le dispositif (3),
**caractérisé par le fait que**
la température des denrées alimentaires liquides peut être déterminée au moyen d'au moins un capteur de température de liquide (35) entre un raccordement (5) et une sortie (8) et/ou entre un réservoir (13) et un raccordement (6) et que par la différence de température et/ou le temps de pasteurisation dans le conteneur (1) peut être réglé le temps de cycle des denrées alimentaires liquides au moyen d'une commande et que les denrées alimentaires liquides traversent le tube en spirale (4) du conteneur (1) de façon discontinue.

2. Distributeur selon la revendication 1, **caractérisé par le fait qu'**entre la sortie (8) et le conteneur (1) est prévu au moins un accumulateur intermédiaire (32).

3. Distributeur selon la revendication 1 ou 2, **caractérisé par le fait que** le liquide (F) peut être mû pour l'échauffement du dispositif (3) dans le conteneur (1).

4. Distributeur selon la revendication 3, **caractérisé par le fait que** pour le brassage radial et/ou axial du liquide (F) dans le conteneur (1), celui-ci entre ou circule environ radialement dans le conteneur (1).

5. Distributeur selon la revendication 3, **caractérisé par le fait que** le liquide (F) entre dans le conteneur (1) environ radialement dans le sens d'enroulement (18) du tube en spirale (4) ou dans le sens contraire à ce dernier.

6. Distributeur selon au moins l'une des revendications 1 à 5, **caractérisé par le fait qu'**au moins une ouverture (29) de l'entrée (27) dans le conteneur (1) est orientée environ radialement à axialement et est disposée à l'endroit d'un élément de cylindre (28).

7. Distributeur selon au moins l'une des revendications 1 à 6, **caractérisé par le fait qu'**au conteneur (1) est raccordé, par l'intermédiaire d'un conduit de liaison (15), un conteneur d'équilibrage (16).

8. Distributeur selon la revendication 7, **caractérisé par le fait que** le conteneur d'équilibrage (16) est réalisé sous forme de dispositif de préchauffage (21) destiné à recevoir au moins un conteneur de réception (22).

9. Distributeur selon la revendication 7 ou 8, **caractérisé par le fait qu'**entre le conteneur d'équilibrage (16) et le conteneur (1) est prévu un conduit de circulation additionnel (25) à pompe de circulation (26) incorporée.

10. Distributeur selon la revendication 9, **caractérisé par le fait qu'**un mouvement du liquide (F) dans le conteneur (1) a lieu par activation de la pompe de circulation (26) et que le liquide (F) arrive, par l'intermédiaire du conduit de circulation (25), au conteneur d'équilibrage (16) et peut, de là, être alimenté en circulation, par l'intermédiaire du conduit de liaison (15), vers le conteneur (1).

11. Distributeur selon au moins l'une des revendications 1 à 10, **caractérisé par le fait que** le liquide (F) peut, pour l'échauffement du dispositif (3) dans le conteneur (1), être mis en mouvement, en particulier en circulation, au moyen d'un élément de pale (24) entraînable.

12. Distributeur selon la revendication 11, **caractérisé par le fait que** l'élément de pale (24) peut être entraîné par l'intermédiaire d'un moteur d'entraînement (23) et que l'élément de pale (24) et le moteur d'entraînement (23) sont disposés du côté frontal sur le conteneur (1), de manière centrale ou excentrée.

13. Distributeur selon au moins l'une des revendications 1 à 12, **caractérisé par le fait qu'**au conteneur (1), en particulier au dispositif (3), est associé au moins un élément chauffant (19).

14. Distributeur selon au moins l'une des revendications 1 à 13, **caractérisé par le fait qu'**au dispositif (3) est raccordé au moins un conduit d'alimentation (9) avec une pompe de dosage (10) incorporée, à au moins un conduit d'alimentation (9) pouvant être raccordé un réservoir (12) à denrées alimentaires, à boissons ou jus.

15. Distributeur selon au moins l'une des revendications 7 à 14, **caractérisé par le fait qu'**au conteneur d'égalisation (16) est associé un capteur d'état de remplissage (17).

16. Distributeur selon la revendication 15, **caractérisé par le fait qu'**à un signal correspondant du capteur d'état de remplissage (17) peut être commutée, directement ou par l'intermédiaire d'une commande (11), une soupape (14), pour activer une source de liquide (13) raccordée au conteneur (1).

17. Distributeur selon au moins l'une des revendications 1 à 16, **caractérisé par le fait qu'**au dispositif (3), en particulier au tube en spirale (4), est associé un capteur de température (20).

18. Distributeur selon au moins l'une des revendications 1 à 17, **caractérisé par le fait que** dans au moins un conduit d'alimentation (9) est placée une pompe de dosage (10) qui transporte les denrées alimentaires liquides de manière discontinue, à travers le conteneur (1), en particulier à travers le tube en spirale (4), vers la sortie (8).

19. Distributeur selon au moins l'une des revendications 2 à 18, **caractérisé par le fait qu'**à l'endroit du raccordement (5) du conteneur (1) et/ou dans l'accumulateur intermédiaire (32) et/ou à l'endroit de la sortie (8) est prévu au moins un capteur de température de liquide (35) qui détermine la température des denrées alimentaires liquides et que, en cas d'écart par rapport à une température de pasteurisation, une vitesse de transport des denrées alimentaires liquides peut être modifiée au moyen de la pompe de dosage (10).

20. Distributeur selon au moins l'une des revendications 2 à 19, **caractérisé par le fait qu'**entre l'accumulateur intermédiaire (32) et le réservoir (12) est placé un conduit de retour (36), le conduit de retour (36) débouchant entre la pompe de dosage (10) et le réservoir (12) dans le conduit d'alimentation (9).

21. Distributeur selon au moins l'une des revendications 1 à 20, **caractérisé par le fait qu'**entre le réservoir (12) et le raccordement (6), en particulier dans le conduit d'alimentation (9), est prévu au moins un capteur de température de liquide (35) destiné à déterminer la température des denrées alimentaires liquides provenant du réservoir (12).

22. Distributeur selon au moins l'une des revendications 2 à 21, **caractérisé par le fait qu'**à l'au moins un accumulateur intermédiaire (32) est associé au moins un chauffage complémentaire (38) destiné à maintenir la température de pasteurisation des denrées alimentaires liquides.

23. Distributeur selon au moins l'une des revendications 1 à 22, **caractérisé par le fait que** par la détermination de la température des denrées alimentaires à l'endroit du réservoir (13) et/ou à l'endroit du conduit d'alimentation (9) au moyen d'au moins un capteur de température de liquide (35) peuvent être réglés, en particulier régulés, une température de pasteurisation souhaitée à l'endroit entre le conduit (7) et la sortie (8), compte tenu du temps de pasteurisation dans l'accumulateur intermédiaire (32) et/ou dans le conteneur (1) ou dans le tube en spirale (4), le temps de passage ou le temps de cycle du liquide à pasteuriser.

24. Distributeur selon au moins l'une des revendications 2 à 23, **caractérisé par le fait qu'**à un signal, au moins d'un capteur d'état de remplissage (39) dans l'accumulateur intermédiaire (32), le liquide peut à nouveau être alimenté vers le conteneur (1), par l'intermédiaire du conduit de retour (36), pour continuer la pasteurisation.
